# EUROPÄISCHE PATENTSCHRIFT

(11) **EP 3 166 193 B1**
(45) Veröffentlichungstag und Bekanntmachung des Hinweises auf die Patenterteilung: **31.01.2018**
(21) Anmeldenummer: 16195397.1
(22) Anmeldetag: 25.10.2016
(51) Int. Cl.: H02H 9/06, H01H 79/00, H01T 1/14, H01C 7/12, H01H 85/44, H01H 85/048, H01H 83/10

(54) **SCHALTEINRICHTUNG FÜR ÜBERSPANNUNGSSCHUTZGERÄTE**
SWITCHING APPLIANCE FOR OVERVOLTAGE PROTECTION DEVICES
DISPOSITIF DE COUPURE POUR APPAREILS DE PROTECTION CONTRE DES SURTENSIONS

(30) Priorität: 09.11.2015 DE 102015014475; 16.02.2016 DE 102016001767
(43) Veröffentlichungstag der Anmeldung: 10.05.2017
(73) Patentinhaber: DEHN + SÖHNE GMBH + CO KG, 92318 Neumarkt/Opf (DE)
(72) Erfinder: ZÄUNER, Edmund, 92334 Berching/Pollanten (DE); WITTMANN, Georg, 92283 Lauterhofen (DE); HIRSCHMANN, Helmut, 92348 Berg (DE); LANG, Christian, 90584 Allersberg (DE)
(74) Vertreter: Kruspig, Volkmar

(56) Entgegenhaltungen:
- DE-A1-102013 019 391
- DE-A1-102014 202 880
- US-A- 5 583 734

## Beschreibung

Die Erfindung betrifft eine Schalteinrichtung für Überspannungsschutzgeräte, bestehend aus einem stoßstromfähigen ersten Schaltelement, insbesondere einer Sicherung, welches mit dem oder den Ableitern des Überspannungsschutzgeräts eine Reihenschaltung eines Stoßstrompfads bildet, sowie einem Fehlerstrompfad, welcher parallel zum Ableiter geschalten ist, gemäß Anspruch 1.

Aus der DE 10 2009 022 069 A1 ist ein Überspannungsableiter vorbekannt, der in einem Gehäuse mindestens ein Ableitelement, insbesondere ausgebildet als Varistor, aufweist.

Die vorbekannte Lösung umfasst darüber hinaus eine thermische Abschaltvorrichtung, ausgebildet als Sicherung. Die Sicherung weist ein bewegliches Bauteil auf, welches von einem Kennmelder-Draht fixiert und nach Schmelzen bzw. Zerstören dieses Drahtes freigegeben wird. Der bewegliche Bolzen ist also in der Lage, mit dem Schmelzen des Kennmelder-Drahts eine Bewegung auszuführen. Infolge der Bewegung des Bolzens vom Sicherungskörper weg nach oben wird ein Führungsteil freigegeben und es kann ein dort vorhandener Schieber eine entsprechende Bewegung unter Einwirkung einer Federvorspannkraft ausführen. Diese ausgeführte Bewegung wird für das Aktivieren einer optischen Schadensanzeige genutzt.

Thermisch gekoppelte Abtrennvorrichtungen für Überspannungsschutzgeräte sind darüber hinaus aus der DE 10 2006 036 598 A1 vorbekannt. Dort wird eine Schaltzunge und eine zugehörige Lotstelle mit einer Vorspann-, Auslöse- und Schaltkraft beaufschlagt. Durch die thermische Kopplung und die Zeitverzögerung der notwendigen Wärmeübertragung ist eine gewünschte schnelle Betätigung im Störungsfall problematisch.

Eine Kombination von elektrischen Schalteinrichtungen mit mechanischen Elementen zur Erhöhung des Eigenlöschvermögens zeigt die Überspannungsschutzanordnung nach DE 10 2011 018 556 A1.

Es ist demnach festzuhalten, dass Überspannungsschutzgeräte auf Varistor-Basis üblicherweise mittels thermischer Abtrennung einer Lotstelle vor Überlastung geschützt werden. Solche Lösungsansätze weisen den Nachteil auf, dass die Abschaltung relativ träge, d.h. erst mit dem Erreichen der Schmelztemperatur des Lotes erfolgt. Ein Schutz des Überspannungselements, insbesondere des eingesetzten Varistors ist nur in einem Strombereich von kleinen Leckströmen mit einigen mA bis hin zu wenigen A gegeben. Energiereiche Stoßstromimpulse oder größere netzfrequente Überlastströme können hingegen zu einem unzulässigen Ausfall im Sinne einer Explosion und Zerstörung des Überspannungsschutzgeräts führen.

Die bekannt gewordene Verwendung einer integrierten Sicherung führt zwar zur Abschaltung bei auftretenden großen Strömen, Fehlerströme, die unterhalb des Sicherungswerts liegen, können dennoch zu einem unzulässigen Ausfall des entsprechenden Ableiters führen.

Weiterhin bekannte Maßnahmen, wie z.B. die Kapselung von Varistoren mit Umschaltung auf eine Sicherung oder Druckkontaktierung, verbessern zwar die Abschalteigenschaften, es verbleiben aber Ausfalllücken in dem Strombereich bestehen, der für die thermische Abtrennvorrichtung zu groß, jedoch für die Abschaltung der eigentlichen Vorrichtung noch zu gering ist. Die Dokumente DE 10 2013 019 391 A1 und US 5 583 734 offenbaren jeweils Schalteinrichtungen für Überspannungsschutzgeräte gemäß dem Oberbegriff des Patentanspruchs 1. Ein Nachteil der bekannten Abschalteinrichtungen für Überspannungsschutzgeräte ist weiterhin, dass diese nicht in der Lage sind, höhere Spannungen und höhere Ströme zu führen und einen eigensicheren Zustand im Störungsfall zu schaffen.

Aus dem Vorgenannten ist es daher Aufgabe der Erfindung, eine weiterentwickelte Abschaltvorrichtung für Überspannungsschutzgeräte anzugeben, die ein Schaltvermögen in einem erhöhten Strombereich von wenigen A, insbesondere > 3 A, bis zur maximalen Schaltleistung der Schaltorgane im Stoßstromfall aufweist. Damit soll ein breitbandiges Gesamtschaltvermögen über den kompletten Strombereich vom Leckstrom hin bis zur maximalen Schaltleistung erreichbar werden. Insbesondere für den Fall, dass integrierte oder externe Vorsicherungen vorhanden sind, soll die Abschaltvorrichtung so ausgebildet werden, dass mittels Kurzschluss der kompletten Überspannungsschutzeinrichtung ein voller Kurzschlussstrom zum Fließen kommt, so dass eine integrierte oder externe Vorsicherung sicher und schnell zum Auslösen gebracht werden kann.

Die Lösung der Aufgabe der Erfindung erfolgt durch eine Schalteinrichtung für Überspannungsschutzgeräte gemäß der Merkmalskombination nach Anspruch 1, wobei die Unteransprüche mindestens zweckmäßige Ausgestaltungen und Weiterbildungen darstellen.

Die erfindungsgemäße Schalteinrichtung für Überspannungsschutzgeräte besteht demnach aus einem ersten stoßstromfähigen Schaltelement, insbesondere einer Sicherung. Diese Sicherung kann als integrierte Vorsicherung, aber auch als externe Vorsicherung ausgebildet sein. Das erste Schaltelement bildet mit mindestens einem ersten Überspannungsableiter, vorzugsweise ausgebildet als Gasableiter, eine Reihenschaltung eines Stoßstrompfads. Weiterhin ist ein Fehlerstrompfad vorhanden, welcher parallel zum ersten Ableiter geschalten ist. Dem ersten Ableiter liegt ein zweiter Ableiter, ausgebildet als Varistor, in Reihe.

Im Fehlerstrompfad befindet sich mindestens ein zweites Schaltelement. Dieses zweite Schaltelement ist derart mit einem Kurzschließer mechanisch gekoppelt, dass bei andauernden unzulässigen Belastungen des zweiten Ableiters im Stoßstrompfad ein Kurzschluss entsteht mit der Folge des Auslösens des ersten Schaltelements und galvanischer Trennung des Stoßstrompfads vom jeweiligen Netz.

In bevorzugter Weiterbildung der Erfindung ist das mindestens eine zweite Schaltelement als Kennmelder-Sicherung ausgeführt.

Diese Kennmelder-Sicherung besitzt einen Bolzen, welcher mit dem Schmelzen des Kennmelder-Drahts freigegeben wird, wobei der Bolzen ein Steuer- oder Betätigungselement für den Kurzschließer bildet.

Erfindungsgemäß stellt bei der vorgeschlagenen Schalteinrichtung der Stoßstrompfad den Hauptstromkreis und der Fehlerstrompfad einen quasi Abbildungsstromkreis mit Eigenabschaltvermögen dar, wobei im Abbildungsstromkreis dem zweiten Schaltelement eine Impedanz in Reihe geschalten ist und diese Reihenschaltung dem vorerwähnten ersten Ableiter, der im Hauptstromkreis liegt, parallel geschalten ist, derart, dass bei höheren Strömen im Abbildungsstromkreis über den ausgelösten Kurzschluss ein eigensicherer Zustand der Einrichtung erreichbar ist.

In einer Weiterbildung der Erfindung kann im Stoßstrompfad eine an sich bekannte thermische Abtrennvorrichtung befindlich sein, wobei die thermisch gesteuerte Abtrennvorrichtung den Zustand des im Stoßstrompfad angeordneten Varistors, d.h. des zweiten Ableiters überwacht.

Das erste, als Vorsicherung ausgebildete Schaltelement kann als eine externe, bedarfsgerechte Sicherung ausgeführt werden. Damit ist eine Auslegung des Eigenschaltvermögens je nach Einsatzfall oder Kundenwunsch möglich.

In einer weiteren Ausführungsform der Erfindung ist parallel zum Stoßstrompfad eine thermisch gesteuerte Kurzschließereinrichtung angeordnet, welche im Überlastfall den Stoßstrompfad und damit letztendlich die gesamte Anordnung kurzschließt. Diese thermisch gesteuerte Kurzschließereinrichtung überwacht vorzugweise den Zustand eines im Stoßstrompfad befindlichen Varistors. Bei Überschreiten der Aktivierungstemperatur der diesbezüglichen thermischen Abtrennvorrichtung wird ein mechanischer Kurzschließer ausgelöst, der wiederum eine Vorsicherung oder eine integrierte Sicherung als erstes Schaltelement zum Ansprechen bringt.

Die im Abbildungsstromkreis bzw. Fehlerstrompfad vorhandene Impedanz und deren Auslegung bestimmt das Auslöseverhalten des zweiten Schaltelements, so dass hier ebenfalls eine Anpassung an individuell vorgegebene oder gewünschte Parameter möglich ist.

Die Erfindung soll nachstehend anhand eines Ausführungsbeispiels sowie unter Zuhilfenahme von Figuren näher erläutert werden.

Hierbei zeigen:
- Fig. 1: ein Prinzipschaltbild der erfindungsgemäßen Schalteinrichtung für Überspannungsschutzgeräte einer ersten Ausführungsform zur Schaffung eines eigensicheren Ableiters;
- Fig. 2: ein Prinzipschaltbild einer weiteren Ausführungsform der erfindungsgemäßen Schalteinrichtung, wobei Leckströme durch die dort gezeigte thermische Abtrennvorrichtung abgetrennt und größere Fehlerströme durch das Auslösen der Kennmelder-Sicherung und Überführung in den Kurzschlusszustand beherrscht werden, wobei der Kurzschlusszustand zur Auslösung einer externen Vorsicherung führt (in der Figur nicht gezeigt);
- Fig. 3a: eine Weiterbildung der Schalteinrichtung, ausgebildet als genereller Kurzschließer, wobei das thermische Ansprechen einer Abtrennvorrichtung eines dort im Hauptstrompfad befindlichen Varistors zum Auslösen eines generellen Kurzschlusses genutzt wird, und
- Fig. 3b: eine Weiterbildung der Schalteinrichtung mit einem einzigen Kurzschließer, der sowohl beim Ansprechen der thermischen Abtrennvorrichtung als auch durch das Auslösen der Kennmelder-Sicherung aktivierbar ist.

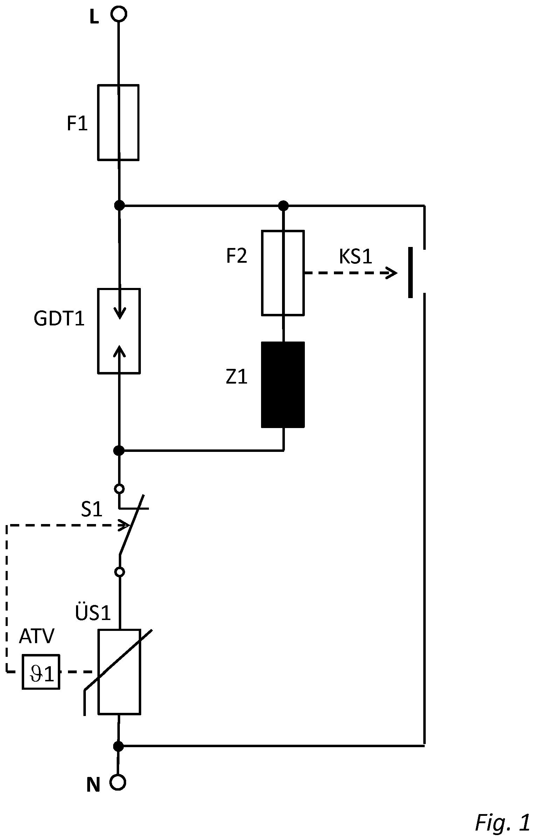

Bei der Schalteinrichtung für Überspannungsschutzgeräte gemäß dem Prinzipschaltbild nach Fig. 1 wird von einer Reihenschaltung eines ersten Schaltelements, ausgebildet als Sicherung, insbesondere Vorsicherung F1, und eines Überspannungsableiters, ausgebildet als Gasableiter GDT1 ausgegangen. Die vorgenannte Reihenschaltung umfasst noch einen Varistor als Überspannungsableiter ÜS1, der über eine thermische Abtrennvorrichtung ATV verfügt.

Die thermische Abtrennvorrichtung ATV löst einen Abtrennvorgang mittels einer Schalteinrichtung S1 bei entsprechender Überlastung des Varistors ÜS1 aus.

Dem Gasableiter GDT1 ist ein Fehlerstrompfad parallel geschalten. Dieser Fehlerstrompfad besteht aus einer Impedanz Z1 und einer Kennmelder-Sicherung F2.

Mit dem Auslösen der Kennmelder-Sicherung F2 und einem dort vorhandenen mechanischen Steuer- oder Betätigungselement wird ein Kurzschließer KS1 betätigt. In dem Moment, wo der Kurzschließer KS1 den gezeigten Stromkreis schließt, wird die Vorsicherung F1 zum Ansprechen gebracht und es geht die Gesamtanordnung in einen eigensicheren Zustand über.

Beispielsweise werden Ströme < 3A durch die thermische Abtrennvorrichtung ATV am Überspannungsableiter ÜS1 abgetrennt. Ströme > 3A werden durch das Auslösen der Kennmelder-Sicherung F2 in Verbindung mit dem Kurzschließer KS1 beherrscht, und zwar durch Übergang in einen satten Kurzschluss, welcher wie vorerwähnt die Vorsicherung F1 unverzüglich zum Ansprechen bringt. Die Abschaltleistung entspricht im Idealfall der Kurzschlussleistung der Vorsicherung F1.

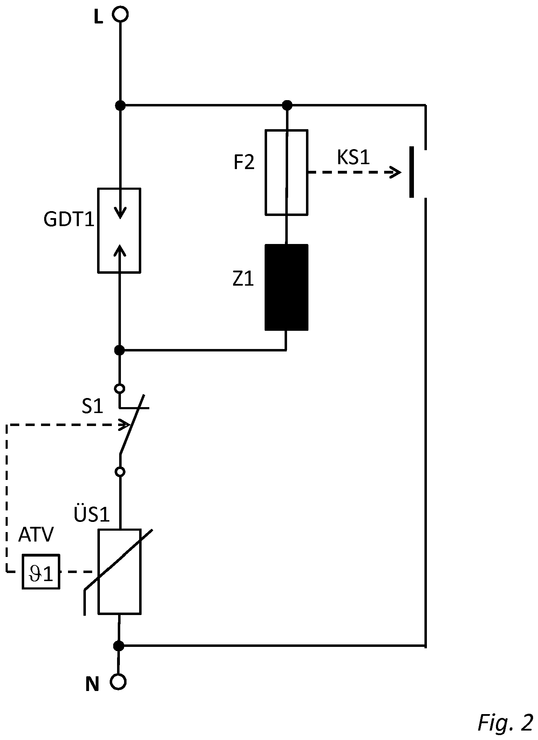

Bei der Ausbildung eines bedarfsgerechten Kurzschließers nach Fig. 2 wird von einer vergleichbaren Schaltungsanordnung, wie anhand der Fig. 1 erläutert, ausgegangen. Leckströme werden gemäß dieser Ausführungsform durch die thermische Abtrennvorrichtung ATV in Verbindung mit dem Varistor ÜS1 abgetrennt. Größere Fehlerströme werden durch das Auslösen der Kennmelder-Sicherung F2 und das Aktivieren des Kurzschließers KS1 beherrscht. Die gezeigte Schaltungsanordnung umfasst keine integrierte Vorsicherung, sondern geht von einer externen Vorsicherung aus, die beim Erreichen des Kurzschlusszustands durch Aktivieren des Kurzschließers KS1 einem Auslösen unterliegt.

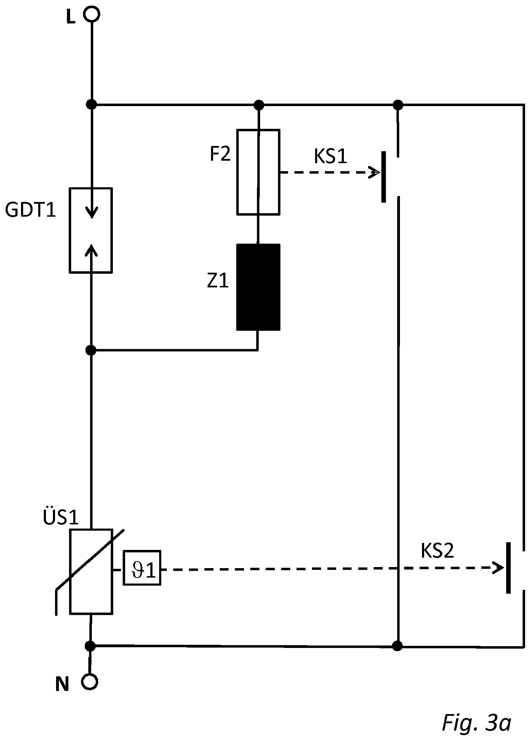

Bei der Weiterbildung der Schalteinrichtung als genereller Kurzschließer nach Fig. 3a liegt eine Grundkonfiguration analog den Darstellungen und Erläuterungen zu Fig. 2 vor. Der dortige Überspannungsableiter, insbesondere Varistor ÜS1, verfügt über eine thermische Aktivierungseinrichtung, die nun nicht der thermischen Abtrennung des Varistors ÜS1 dient, sondern einen Kurzschließer KS1 betätigt. Durch das thermische Ansprechen bei Überlast des Varistors ÜS1 kann ein gezielter Kurzschlusszustand durch Aktivieren des Kurzschließers KS1 erfolgen. Kommt es gegebenenfalls zu einem verzögerten Ansprechen und schneller, hoher Strombelastung, wird die Kennmelder-Sicherung F2 mit betätigtem Kurzschließer KS1 aktiv, so dass letztendlich ebenfalls eine externe Vorsicherung anspricht.

Verschiedene Versuche und praktische Erprobungen der in den Figuren angedeuteten und gezeigten Schaltungsanordnungen haben bestätigt, dass ein eigensicheres Verhalten bei Prüfströmen von einigen Ampere bis in den mehrstelligen Kiloamperebereich reproduzierbar erreicht wird.

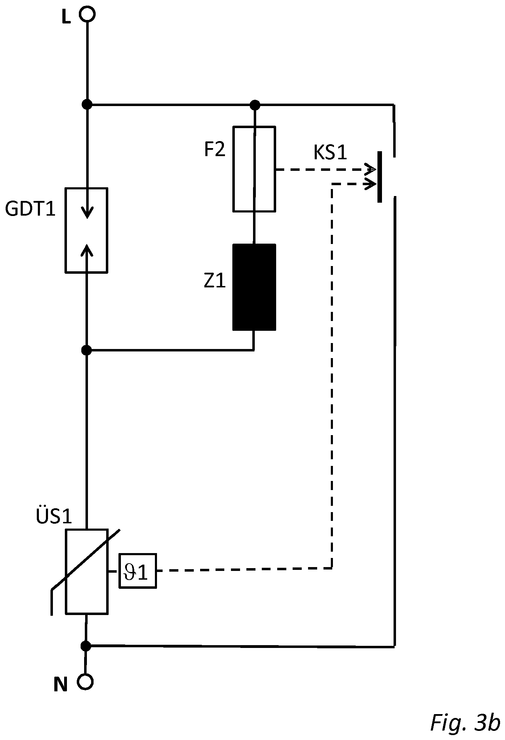

Die Schalteinrichtung nach Fig. 3b ist ähnlich derjenigen nach Fig. 3a aufgebaut, besitzt jedoch nur einen einzigen Kurzschließer KS1. Dieser Kurzschließer KS1 kann sowohl von der Kennmelder-Sicherung F2 als auch von der thermischen Aktivierungseinrichtung des Varistor ÜS1 betätigt werden und für einen sicheren Kurzschluss sorgen.

## Patentansprüche

1. Schalteinrichtung für Überspannungsschutzgeräte, bestehend aus einem stoßstromfähigen ersten Schaltelement (F1), insbesondere einer Sicherung, welche mit einem ersten und einem zweiten Ableiter (GDT1; ÜS1) des Überspannungsschutzgeräts eine Reihenschaltung eines Stoßstrompfads bildet, **gekennzeichnet durch** einen Fehlerstrompfad, welcher parallel zum ersten Ableiter (GDT1) geschalten ist, und wobei im Fehlerstrompfad mindestens ein zweites Schaltelement (F2) angeordnet und derart mit einem Kurzschließer (KS1) mechanisch gekoppelt ist, dass bei andauernden unzulässigen Belastungen des zweiten Ableiters (ÜS1) im Stoßstrompfad ein Kurzschluss entsteht mit der Folge des Auslösens des ersten Schaltelements (F1) und galvanischer Trennung des Stoßstrompfads vom jeweiligen Netz (L; N).

2. Schalteinrichtung nach Anspruch 1,
**dadurch gekennzeichnet, dass**
das mindestens eine Schaltelement (F2) als Kennmelder-Sicherung ausgebildet ist.

3. Schalteinrichtung nach Anspruch 2,
**dadurch gekennzeichnet, dass**
die Kennmelder-Sicherung einen Bolzen besitzt, welcher mit dem Schmelzen des Kennmelder-Drahts freigegeben wird, wobei der Bolzen ein Steuer- oder Betätigungselement für den Kurzschließer (KS1) bildet.

4. Schalteinrichtung nach einem der vorangegangenen Ansprüche,
**dadurch gekennzeichnet, dass**
der Stoßstrompfad den Hauptstromkreis und der Fehlerstrompfad einen Abbildungsstromkreis mit Eigenabschaltvermögen darstellt, wobei im Abbildungsstromkreis dem zweiten Schaltelement (F2) eine Impedanz (Z1) in Reihe geschalten ist und diese Reihenschaltung einem Gasableiter (GDT1) als erstem Ableiter, der im Hauptstromkreis liegt, parallel geschalten ist, derart, dass bei höheren Strömen im Abbildungsstromkreis über den ausgelösten Kurzschluss ein eigensicherer Zustand der Einrichtung erreicht wird.

5. Schalteinrichtung nach einem der vorangegangenen Ansprüche,
**dadurch gekennzeichnet, dass**
im Stoßstrompfad eine thermisch gesteuerte Abtrennvorrichtung (ATV) befindlich ist.

6. Schalteinrichtung nach Anspruch 5,
**dadurch gekennzeichnet, dass**
die thermisch gesteuerte Abtrennvorrichtung (ATV; S1) den Zustand eines im Stoßstrompfad befindlichen Varistors (ÜS1) als zweiten Ableiter überwacht.

7. Schalteinrichtung nach einem der vorangegangenen Ansprüche,
**dadurch gekennzeichnet, dass**
das erste, als Vorsicherung ausgebildete Schaltelement (F1) als eine externe, bedarfsgerechte Sicherung ausgeführt ist.

8. Schalteinrichtung nach einem der Ansprüche 1 bis 4,
**dadurch gekennzeichnet, dass**
im Stoßstrompfad eine thermisch gesteuerte Kurzschließereinrichtung (KS2) angeordnet ist, welche im Überlastfall den Stoßstrompfad kurzschließt.

9. Schalteinrichtung nach Anspruch 8,
**dadurch gekennzeichnet, dass**
die thermisch gesteuerte Kurzschließereinrichtung (KS1) den Zustand eines im Stoßstrompfad befindlichen Varistors (ÜS1) überwacht.

10. Schalteinrichtung nach einem der Ansprüche 4 bis 9,
**dadurch gekennzeichnet, dass**
über die Impedanz (Z1) das Auslöseverhalten des zweiten Schaltelements (F2) auslegbar ist.

## Claims

1. Switching appliance for overvoltage protection devices, composed of a first switching element (F1) capable of surge current, in particular a fuse, forming a series connection of a surge current path together with a first and a second arrester (GDT1; ÜS1) of the overvoltage protection device, **characterized by** a fault current path connected in parallel to the first arrester (GDT1),
and wherein
at least one second switching element (F2) is arranged in the fault current path and mechanically coupled to a short-circuiter (KS1) such that a short-circuit is generated in the surge current path upon continuing inadmissible loads of the second arrester (ÜS1) with the consequence of triggering the first switching element (F1) and galvanically disconnecting the surge current path from the respective mains (L; N).

2. Switching appliance according to claim 1,
**characterized in that**
the at least one switching element (F2) is formed as an indicator fuse.

3. Switching appliance according to claim 2,
**characterized in that**
the indicator fuse has a bolt which is released with the melting of the indicator wire, wherein the bolt constitutes a control or actuating element for the short-circuiter (KS1).

4. Switching appliance according to any one of the preceding claims,
**characterized in that**
the surge current path represents the main circuit and the fault current path represents a reference circuit having an intrinsic disconnection capacity, wherein in the reference circuit, an impedance (Z1) is connected in series to the second switching element (F2) and said series connection is connected in parallel to a gas arrester (GDT1) as the first arrester located in the main circuit, in such a manner that upon higher currents in the reference circuit, an intrinsically safe state of the appliance is achieved via the triggered short-circuit.

5. Switching appliance according to any one of the preceding claims,
**characterized in that**
a thermally controlled separating device (ATV) is situated in the surge current path.

6. Switching appliance according to claim 5,
**characterized in that**
the thermally controlled separating device (ATV; S1) monitors the state of a varistor (ÜS1) as the second arrester situated in the surge current path.

7. Switching appliance according to any one of the preceding claims,
**characterized in that**
the first switching element (F1) that is formed as a backup fuse is realized as an external needs-based fuse.

8. Switching appliance according to any one of claims 1 to 4,
**characterized in that**
a thermally controlled short-circuiter means (KS2) is arranged in the surge current path, which short-circuits the surge current path in case of overload.

9. Switching appliance according to claim 8,
**characterized in that**
the thermally controlled short-circuiter means (KS2) monitors the state of a varistor (ÜS1) situated in the surge current path.

10. Switching appliance according to any one of the claims 4 to 9,
**characterized in that**
the triggering behavior of the second switching element (F2) can be configured via the impedance (Z1).

## Revendications

1. Dispositif de coupure pour des appareils de protection contre des surtensions, constitué par un premier élément de commutation (F1) supportant des courants de choc, en particulier un fusible, qui constitue un circuit série d'un trajet de courant de choc avec un premier et un second dérivateur (GDT1 ; ÜS1) de l'appareil de protection contre les surtensions,
**caractérisé par**
un trajet de courant de défaut qui est branché en parallèle au premier dérivateur (GDT1), et
dans le trajet de courant de défaut est agencé au moins un second élément de commutation (F2) et est couplé mécaniquement à un court-circuiteur (KS1) de telle sorte qu'en cas de charges inadmissibles persistantes du second dérivateur (ÜS1), un court-circuit se produit dans le trajet de courant de choc ayant pour conséquence un déclenchement du premier élément de commutation (F1) et une séparation galvanique du trajet de courant de choc vis-à-vis du réseau respectif (L ; N).

2. Dispositif de coupure selon la revendication 1,
**caractérisé en ce que**
ledit au moins un élément de commutation (F2) est réalisé sous forme de fusible avertisseur.

3. Dispositif de coupure selon la revendication 2,
**caractérisé en ce que**
ledit fusible avertisseur comprend un goujon qui est libéré lors de la fusion du fil avertisseur, le goujon formant un élément de commande ou d'actionnement pour le court-circuiteur (KS1).

4. Dispositif de coupure selon l'une des revendications précédentes,
**caractérisé en ce que**
le trajet de courant de choc représente le circuit électrique principal et le trajet de courant d'erreur représente un circuit électrique d'imagerie ayant une capacité de coupure autonome, et dans le circuit de courant d'imagerie est branchée une impédance (Z1) en série avec le second élément de commutation et ce branchement en série est branché en parallèle avec un dérivateur à gaz (GDT1) à titre de premier dérivateur qui se trouve dans le circuit électrique principal, de telle sorte que lors de courants plus élevés dans le circuit électrique d'imagerie, il s'établit un état sécurisé autonome du dispositif par le court-circuit déclenché.

5. Dispositif de coupure selon l'une des revendications précédentes,
**caractérisé en ce que**
un moyen de coupure (ATV) à commande thermique se trouve dans le trajet de courant de choc.

6. Dispositif de coupure selon la revendication 5,
**caractérisé en ce que**
le moyen de coupure (ATV ; S1) à commande thermique surveille l'état d'une varistance (ÜS1) à titre de second dérivateur, laquelle se trouve dans le trajet de courant de choc.

7. Dispositif de coupure selon l'une des revendications précédentes,
**caractérisé en ce que**
le premier élément de commutation (F1) réalisé sous forme de fusible préliminaire est réalisé sous forme de fusible externe conforme au besoin.

8. Dispositif de coupure selon l'une des revendications 1 à 4,
**caractérisé en ce que**
un moyen court-circuiteur (KS2) à commande thermique est agencé dans le trajet de courant de choc, qui court-circuite le trajet de courant de choc en cas de surcharge.

9. Dispositif de coupure selon la revendication 8,
**caractérisé en ce que**
le moyen court-circuiteur (KS2) à commande thermique surveille l'état d'une varistance (ÜS1) situé dans le trajet de courant de choc.

10. Dispositif de coupure selon l'une des revendications 4 à 9,
**caractérisé en ce que**
le comportement de déclenchement du second élément de commutation (F2) peut être configuré par l'impédance (Z1).
